# EUROPEAN PATENT APPLICATION

(11) **EP 4 726 860 A1**
(43) Date of publication of application: **15.04.2026**
(21) Application number: 24818232.1
(22) Date of filing: 18.01.2024
(51) Int. Cl.: H01M 10/6556, H01M 10/613, H01M 10/625

(54) **BATTERY AND ELECTRICAL DEVICE**

(30) Priority: 09.06.2023 CN 202310686246
(71) Applicant: Contemporary Amperex Technology Co., Limited, Ningde, Fujian 352100 (CN)
(72) Inventor: WU, Kai, Ningde, Fujian 352100 (CN); YAO, Pengcheng, Ningde, Fujian 352100 (CN); HE, Runyong, Ningde, Fujian 352100 (CN); WANG, Peng, Ningde, Fujian 352100 (CN); CHEN, Xingdi, Ningde, Fujian 352100 (CN)
(74) Representative: Ziebig Hengelhaupt Intellectual Property Attorneys Patentanwaltskanzlei PartGmbB
(86) International application number: PCT/CN2024/073059
(87) International publication number: WO 2024/250694

(57) **Abstract**

This invention relates to the field of battery technologies, and in particular, to a battery and an electric device. The battery of this application includes a case, a cover plate, a battery cell, a heat management component, and a support member, where the case includes an accommodation cavity and an opening communicating with the accommodation cavity, the cover plate is located above the case and covers the opening, the battery cell is disposed in the accommodation cavity, the heat management component includes a heat exchanger and a fluid collector, the heat exchanger and the fluid collector are connected to each other with internal cavities in communication, the heat exchanger is configured to bear the battery cell and is heat-conductively connected to the battery cell, the support member is at least partially located below the fluid collector, and the support member is connected to the fluid collector. According to the battery of this application, the support member is disposed below the fluid collector, so that at least part of a weight of the battery cell is transferred to the support member, thereby reducing a probability of damages such as bending or breakage of the fluid collector.

## Description

### CROSS-REFERENCE TO RELATED APPLICATIONS

This application claims the priority and benefits of the following patent application, which is incorporated herein by reference in its entirety:
Chinese Patent Application No. 202310686246.8, filed with the China National Intellectual Property Administration on June 9, 2023 and entitled "BATTERY AND ELECTRIC DEVICE".

### TECHNICAL FIELD

This application relates to the field of battery technologies, and in particular, to a battery and an electric device.

### BACKGROUND

Currently, it can be learned from market trends that application of power batteries becomes increasingly widespread. Power batteries are applied to energy storage power systems such as hydropower, thermal power, wind power, and solar power plants, and in various fields including military, aerospace, and electric transportation such as electric bicycles, electric motorcycles, and electric vehicles. With the continuous expansion of the application fields of power batteries, the market demands for power batteries keep increasing.

Batteries are used to provide electric energy for electric devices, including a case, a battery cell, and a heat management component, where the heat management component includes a heat exchanger and a fluid collector that communicate with each other, the heat exchanger is disposed inside the case and heat-conductively connected to the battery cell, and the fluid collector is suspended outside the case. Therefore, damages such as bending or breakage of the fluid collector may easily occur.

### SUMMARY

In view of the defects existing in the prior art, the objective of this application is to provide a battery and an electric device having the battery, to effectively solve the problem that a fluid collector is prone to damages such as bending or breakage.

A first aspect of this application provides a battery, where the battery includes:
a case and a cover plate, where the case includes an accommodation cavity and an opening communicating with the accommodation cavity, and the cover plate is located above the case and covers the opening;
a battery cell, disposed in the accommodation cavity;
a heat management component, where the heat management component includes a heat exchanger and a fluid collector, the heat exchanger and the fluid collector are connected to each other with internal cavities in communication, and the heat exchanger is configured to bear the battery cell and is heat-conductively connected to the battery cell; and
a support member, at least partially located below the fluid collector, where the support member is connected to the fluid collector.

According to the battery of this application, a heat exchanger bears the battery cell and is heat-conductively connected to the battery cell, and therefore heat of the battery cell can be conducted through the heat exchanger and the heat exchanger can bear at least part of the weight of the battery cell. Since the fluid collector is connected to the heat exchanger, at least part of the weight of the battery cell can be transferred to the fluid collector through the heat exchanger. With the support member disposed below the fluid collector, at least part of the weight of the battery cell is transferred to the support member, thereby reducing a probability of damages such as bending or breakage of the fluid collector.

In some embodiments of this application, the heat exchanger is located between the battery cell and the cover plate, and is configured to heat-conductively connect to the battery cell and the cover plate.

Disposing the heat exchanger between the battery cell and the cover plate enables the heat exchanger to conduct heat for the battery cell and also to conduct heat upward through the cover plate to a structural component on a side of the cover plate away from the battery cell, allowing simultaneous heat management of components on two sides and improving effective utilization of the heat exchanger. When a temperature of the battery cell or a component on an outer side of the cover plate is low, the heat exchanger can heat the battery cell or the component on the outer side of the cover plate; alternatively, when the temperature of the battery cell or the outer side of the cover plate rises, the heat management component can dissipate heat for the battery cell and the component on the outer side of the cover plate, lowering the temperature of the battery cell or the component on the outer side of the cover plate, thereby broadening application of the heat conduction function of the heat exchanger and improving effective utilization of the heat exchanger.

In some embodiments of this application, the case includes a plurality of case beams connected to the cover plate, and the case beams form the support member.

The side beams are configured for connection to the cover plate of the case, and have a certain supporting strength. The side beams are disposed below the fluid collector and are configured to connect to the fluid collector, so that at least part of the weight of the battery cell is transferred to the side beams, thereby reducing the probability of damages such as bending or breakage of the fluid collector.

In some embodiments of this application, the case beam is formed with an accommodation groove, and at least part of the fluid collector is located in the accommodation groove.

The accommodation groove is provided on the case beam and at least part of the fluid collector is positioned in the accommodation groove, so that the case beam can support the fluid collector and bear at least part of the weight of the battery cell while space that is for the battery cell inside the case and that is occupied by the fluid collector is reduced, thereby facilitating arrangement of more battery cells within the case and improving a power supply capacity of the battery.

In some embodiments of this application, the case beams include a partition beam, the partition beam is configured to divide the accommodation cavity into at least two chambers, the at least two chambers include a first chamber for accommodating the battery cell, and a surface of the partition beam facing the first chamber or a surface facing the cover plate has the accommodation groove.

The heat exchanger may be located within the first chamber to conduct heat for the battery cell, and the fluid collector is disposed in the accommodation groove on the partition beam. According to the above solution, the fluid collector does not occupy space within the first chamber, thereby facilitating the arrangement of more battery cells in the first chamber. Additionally, the fluid collector is close to the first chamber, facilitating the connection between the heat exchanger and the fluid collector, and avoiding excessive protrusion of the heat exchanger beyond the first chamber, which results in material waste.

In some embodiments of this application, the case beams include a first side beam, and a surface of the first side beam facing the cover plate or a surface facing the accommodation cavity is provided with the accommodation groove.

The first side beam is disposed near an edge of the case, and the accommodation groove is positioned on the first side beam, helping to lead part of the structure of the fluid collector to the outside of the case, thereby enabling communication with an external pipeline.

In some embodiments of this application, a first surface of the first side beam facing the accommodation cavity is provided with the accommodation groove, and a minimum spacing dimension between the fluid collector and the battery cell is greater than or equal to a minimum spacing dimension between the first surface and the battery cell.

Since the minimum spacing dimension between the fluid collector and the battery cell is greater than or equal to the minimum spacing dimension between the first surface and the battery cell, that is, the first surface is disposed closer to the battery cell in the accommodation cavity relative to the fluid collector, the first fluid collector does not protrude beyond the first surface and occupy the space for the battery cell in the accommodation cavity, thereby facilitating arrangement of more battery cells in the accommodation cavity and improving a power supply capacity of the battery.

In some embodiments of this application, a minimum thickness dimension of the fluid collector in a vertical direction is h1, where a value range of h1 is 0.5 mm≤h1≤50 mm, and preferably, the value range of h1 is 2 mm≤h1≤20 mm.

Since the weight of the battery cell is at least partially borne by the heat exchanger, and the heat exchanger is connected to the fluid collector, at least part of the weight of the battery cell can be transferred to the fluid collector through the heat exchanger. When the minimum thickness of the fluid collector is excessively small, the fluid collector is prone to damages such as bending or breakage. Therefore, maintaining the minimum thickness of the fluid collector within the range can reduce the possibility of damages such as bending or breakage.

In some embodiments of this application, a weight of the battery is M, where 0.0005 mm/Kg≤h1/M≤10 mm/Kg, and preferably, 0.002 mm/Kg≤h1/M≤2 mm/Kg.

Since the weight of the battery is at least partially borne by the heat exchanger, and the heat exchanger is connected to the fluid collector, under a condition that the weight of the battery is large and the minimum thickness of the fluid collector is excessively small, the fluid collector is prone to damages such as bending or breakage. Therefore, maintaining the ratio of the minimum thickness of the fluid collector to the weight of the battery within this range can reduce the probability of damages such as bending or breakage of the fluid collector.

In some embodiments of this application, a plurality of heat exchangers are provided and spaced apart along a first direction, the fluid collector extends along the first direction and is connected to the plurality of heat exchangers along a second direction, and the first direction and the second direction are perpendicular to each other; and
a width dimension of the fluid collector along the second direction is h2, where a value range of h2 is 0.5 mm≤h2≤100 mm, and preferably, the value range of h2 is 3 mm≤h2≤20 mm.

Since the fluid collector is configured to collect a heat conductive medium flowing into or out of the heat exchangers, if the width dimension of the fluid collector is excessively small, satisfaction to the confluence demand of the plurality of heat exchangers is hard; and if the width dimension of the fluid collector is excessively large, the fluid collector occupies excessive space, leading to an overly large volume of the battery. Therefore, the width dimension of the fluid collector should be controlled within this range.

In some embodiments of this application, a width dimension of the first side beam along the second direction is h3, where 0.005<h2/h3≤50, and preferably, 0.03<h2/h3≤10.

Since the weight of the battery is at least partially borne by the heat exchangers, and the heat exchangers are connected to the fluid collector, at least part of the weight of the battery is transferred to the fluid collector through the heat exchangers. If the ratio of h2 to h3 is excessively small, given a fixed size of the first side beam, the width dimension of the fluid collector easily becomes excessively small, making the fluid collector prone to damages such as bending or breakage; and if the ratio of h2 to h3 is excessively large, a larger accommodation groove needs to be correspondingly provided on the first side beam, easily leading to insufficient strength and reduced reliability of the first side beam. Therefore, controlling the ratio of the width dimension of the fluid collector to the width dimension of the first side beam within this range can achieve better effect.

In some embodiments of this application, a surface of the cover plate facing the case is provided with an accommodation groove, the accommodation groove is disposed directly above the case beam, and at least part of the fluid collector is located in the accommodation groove.

Since the cover plate has a large area, the accommodation groove is easily provided, and the accommodation groove does not occupy space of the case beam, thereby enhancing a supporting strength of the case beam. The accommodation groove is disposed above the case beam, and the case beam supports the fluid collector. In this way, at least part of the weight of the battery cell can be transferred to the case beam, thereby reducing the probability of damages such as bending or breakage of the fluid collector.

In some embodiments of this application, the battery cell includes a pressure relief mechanism and a first end surface facing the heat exchanger, and the pressure relief mechanism is located on another end surface of the battery cell other than the first end surface.

The battery cell is connected to the heat management component through the first end surface. In this way, the battery cell is fixedly connected to the heat management component, enabling heat conduction with the heat management component. Since the pressure relief mechanism is disposed on another end surface other than the first end surface of the battery cell, when the battery cell is in an abnormal state of thermal runaway, the risks such as liquid-induced conduction caused by liquid leakage from the heat management component or thermal management failure can be further reduced, where the risks are brought by high-temperature, high-heat, or even flaming substances ejected by the battery cell through the pressure relief mechanism that damage the heat management component. Additionally, the high-temperature, high-heat, or flaming substances are not ejected toward the side of the cover plate through the pressure relief mechanism, avoiding spread of heat anomalies from the side of the battery cell to the other side of the cover plate.

In some embodiments of this application, the battery cell further includes a second end surface facing away from the heat exchanger, and the pressure relief mechanism is located on the second end surface.

The second end surface is disposed away from the first end surface, so that when the battery cell is in the abnormal state of thermal runaway, the risks such as liquid-induced conduction caused by liquid leakage from the heat management component or thermal management failure can be further reduced, where the risks are brought by the high-temperature, high-heat, or even flaming substances ejected by the battery cell through the pressure relief mechanism that damage the heat management component. Additionally, the high-temperature, high-heat, or flaming substances are not ejected toward the side of the cover plate through the pressure relief mechanism, avoiding spread of heat anomalies from the side of the battery cell to the other side of the cover plate.

A second aspect of this application further provides an electric device, including the battery according to any one of the above embodiments, where the battery is configured to provide electric energy for the electric device.

In some embodiments of the second aspect of this application, the electric device is a vehicle, where the cover plate is configured as a cabin floor of the vehicle.

The cover plate is configured as the cabin floor of the vehicle, that is, at least part of the cabin floor is used to form the cover plate. Since a heat management component is heat-conductively connected to the battery cell and the cover plate, the heat management component can effectively conduct heat for the battery cell and also effectively conduct heat for the cabin floor. When a temperature of the battery cell or the cabin floor is low, the heat management component can heat the battery cell and the cabin floor; alternatively, when the temperature of the battery cell or the cabin floor rises, the heat management component can dissipate heat for the battery cell and the cabin floor, reducing the temperature of the battery cell and the cabin floor, thereby improving comfort inside the cabin and reducing adverse effects of heat on the battery cell.

In some embodiments of the second aspect of this application, a seat beam is connected to the cover plate.

Since the heat management component can effectively conduct heat for the battery cell and also effectively conduct heat for the cover plate, by connecting the cover plate to the seat beam, heat can be conducted for the seat beam through the cover plate. When a temperature of the seat beam is low, the heat management component can heat the seat beam; alternatively, when the temperature of the seat beam rises, the heat management component can dissipate heat for the seat beam, reducing the temperature of the seat beam and improving comfort of the seat beam.

The above description is merely an overview of the technical solutions of this application. To enable a clearer understanding of the technical means of this application, the technical means can be implemented according to the content of the specification. Furthermore, to make the above and other objectives, features, and advantages of this application more apparent and understandable, specific embodiments of this application are provided below.

### BRIEF DESCRIPTION OF DRAWINGS

By reading the detailed description of the preferred embodiments below, various other advantages and benefits become clear to persons of ordinary skill in the art. The drawings are only used for illustrating the preferred embodiments and are not considered limitations on this application. Moreover, throughout the drawings, the same reference signs are used to denote the same components. In the accompanying drawings:
FIG. 1 is a schematic structural diagram of a vehicle according to an embodiment of this application;
FIG. 2 is a schematic diagram of a connection structure between a battery and a seat beam according to an embodiment of this application;
FIG. 3 is a schematic exploded view of a structure of a battery and a seat beam according to an embodiment of this application;
FIG. 4 is a schematic structural diagram of a heat exchanger according to an embodiment of this application;
FIG. 5 is a schematic structural diagram of a heat exchanger according to another embodiment of this application;
FIG. 6 is a schematic structural diagram of A-A cross section of a battery and a seat beam according to an embodiment of this application;
FIG. 7 is a schematic structural diagram of enlarged part B of a battery and a seat beam according to an embodiment of this application;
FIG. 8 is a schematic diagram of a connection structure between a fluid collector and a case according to another embodiment of this application;
FIG. 9 is a schematic diagram of a connection structure between a fluid collector and a cover plate according to another embodiment of this application;
FIG. 10 is a schematic structural diagram of C-C cross section of a battery and a seat beam according to an embodiment of this application;
FIG. 11 is a schematic structural diagram of enlarged part D of a battery and a seat beam according to an embodiment of this application;
FIG. 12 is a schematic structural diagram of C-C cross section of a battery and a seat beam according to another embodiment of this application;
FIG. 13 is a schematic structural diagram of enlarged part E of a battery and a seat beam according to another embodiment of this application;
FIG. 14 is a schematic structural diagram of C-C cross section of a battery and a seat beam according to another embodiment of this application;
FIG. 15 is a schematic structural diagram of enlarged part F of a battery and a seat beam according to another embodiment of this application;
FIG. 16 is a schematic structural diagram of C-C cross section of a battery and a seat beam according to another embodiment of this application; and
FIG. 17 is a schematic structural diagram of enlarged part G of a battery and a seat beam according to another embodiment of this application.

Reference signs in the embodiments are as follows:
1. vehicle;
10. battery; 11. controller; 12. motor; 13. vehicle frame; 14. seat beam;
20. case; 21. cover plate; 22. bottom plate; 23. enclosure plate; 231. first side beam; 2311. first surface; 24. protrusion; 25. accommodation groove;
30. battery assembly; 31. battery cell; 311. first electrode terminal; 312. second electrode terminal; 313. pressure relief mechanism;
40. heat management component; 41. heat exchanger; 42. first fluid collector; 421. first pipe portion; 422. second pipe portion; 43. second fluid collector; 44. liquid inlet; and 45. liquid outlet.

### DESCRIPTION OF EMBODIMENTS

The embodiments of the technical solutions of this application are described in detail below with reference to the accompanying drawings. The following embodiments are merely intended for a clearer description of the technical solutions of this application and therefore are used as examples only, and do not constitute any limitations on the protection scope of this application.

It should be noted that, unless otherwise specified, technical terms or scientific terms used in the embodiments of this application shall have the ordinary meanings understood by persons skilled in the art to which the embodiments of this application pertain.

In the description of the embodiments of this application, the orientations or positional relationships indicated by the technical terms "center", "longitudinal", "transverse", length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on the embodiments of this application.

In addition, the technical terms "first", "second", and the like are merely for the purpose of description, and shall not be understood as any indication or implication of relative importance or any implicit indication of the number of technical features indicated. In the description of the embodiments of this application, "a plurality of" means two or more, unless explicitly and specifically defined otherwise.

In the description of the embodiments of this application, unless explicitly specified and defined otherwise, technical terms such as "install", "connect", "join", "fix" and the like shall be understood in a broad sense, for example, as a fixed connection, a detachable connection, or an integral formation; as a mechanical connection or an electrical connection; as a direct connection or an indirect connection through an intermediate medium; or as an internal communication between two elements or an interaction relationship between two elements. Persons of ordinary skill in the art can understand specific meanings of these terms in the embodiments of this application as appropriate to specific situations.

In the descriptions of the embodiments of this application, unless explicitly specified and defined otherwise, a first feature being "on" or "under" a second feature may mean that the first feature and the second feature are in direct contact, or the first feature and the second feature are in indirect contact through an intermediate medium. Moreover, the first feature being "above", "over", or "on" the second feature may mean that the first feature is directly above or obliquely above the second feature or simply mean that the first feature has a higher level than the second feature. The first feature being "below", "beneath", or "under" the second feature may mean that the first feature is directly below or obliquely below the second feature or simply mean that the first feature has a lower level than the second feature.

Currently, it can be learned from market trends that the application of power batteries is becoming increasingly widespread. Power batteries are applied to energy storage power systems such as hydropower, thermal power, wind power, and solar power plants, and in various fields including military, aerospace, and electric transportation such as electric bicycles, electric motorcycles, and electric vehicles.

Batteries are used to provide electric energy for electric devices, including a case, a battery cell, and a heat management component, where the heat management component includes a heat exchanger and a fluid collector that communicate with each other, the heat exchanger is disposed inside the case and heat-conductively connected to the battery cell, and the fluid collector is suspended outside the case. Therefore, damages such as bending or breakage of the fluid collector may easily occur.

In view of the defects existing in the prior art, the purpose of this application is to provide a battery and an electric device having the battery. In this application, at least part of a weight of the battery cell is transferred to a support member by disposing the support member below a fluid collector, thereby reducing a probability of damages such as bending or breakage of the fluid collector.

To solve the above problem, in this application, a heat exchanger bears the battery cell and is heat-conductively connected to the battery cell, and therefore heat of the battery cell can be conducted through the heat exchanger and the heat exchanger can bear at least part of the weight of the battery cell. Since the fluid collector is connected to the heat exchanger, at least part of the weight of the battery cell can be transferred to the fluid collector through the heat exchanger. With the support member disposed below the fluid collector, at least part of the weight of the battery cell is transferred to the support member, thereby reducing the probability of damages such as bending or breakage of the fluid collector.

Based on the above consideration, this application provides a battery and an electric device having the battery. This battery is suitable for various electric devices using batteries, such as electric scooters, electric toys, electric tools, electric vehicles, ships, and spacecrafts. For example, the spacecrafts include airplanes, rockets, space shuttles, and spaceships. The battery is configured to provide electric energy for the aforementioned electric devices.

It should be understood that the technical solutions described in the embodiments of this application can be applied to the battery and electric device described above, and can also be applied to all batteries including a case and an electric device using a battery. However, for brevity, the following embodiments are all described with an example in which a battery is used in an electric vehicle.

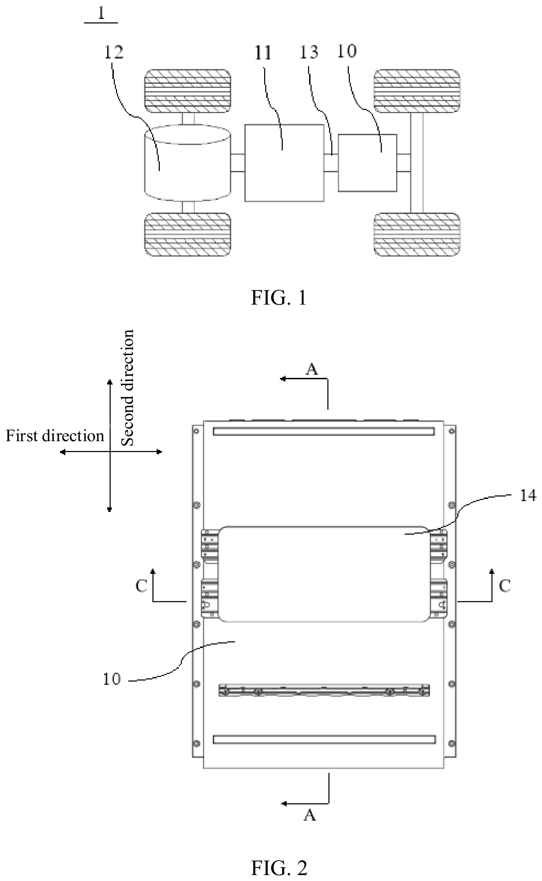

Referring to FIG. 1, FIG. 1 shows a schematic structural diagram of a vehicle 1 according to some embodiments of this application. The vehicle 1 may be a fuel vehicle, a gas vehicle, or an electric vehicle, where the electric vehicle may be a pure electric vehicle, a hybrid vehicle, or an extended-range vehicle. A battery 10 is disposed inside the vehicle 1, and the battery 10 may be disposed at a bottom, front, or rear of the vehicle 1. The battery 10 may be used to supply power to the vehicle 1. For example, the battery 10 may serve as an operational power source for the vehicle 1. The vehicle 1 may further include a controller 11, a motor 12, and a vehicle frame 13, where the battery 10, the controller 11, and the motor 12 are respectively disposed on the vehicle frame 13, and the controller 11 is used to control the battery 10 to supply power to the motor 12, for example, to meet power demands for starting, navigation, and driving of the vehicle 1.

In some embodiments of this application, the battery 10 may be used as the operational power source for the vehicle 1 and also a driving power source for the vehicle 1, completely or partially replacing fossil fuel or natural gas to provide driving traction for the vehicle 1. The battery 10 mentioned in this application may also be referred to as a battery pack.

Referring to FIG. 1 to FIG. 3, in some embodiments of this application, the battery 10 includes a case 20, a cover plate 21, a battery cell 31, a heat management component 40, and a support member, where the case 20 includes an accommodation cavity and an opening communicating with the accommodation cavity, the cover plate 21 is located above the case 20 and covers the opening, the battery cell 31 is disposed in the accommodation cavity, the heat management component 40 includes a heat exchanger 41 and a fluid collector, the heat exchanger 41 and the fluid collector are connected to each other with internal cavities in communication, the heat exchanger 41 is configured to bear the battery cell 31 and is heat-conductively connected to the battery cell 31, the support member is at least partially located below the fluid collector, and the support member is connected to the fluid collector.

Specifically, the case 20 may be configured to accommodate the battery cell 31 to prevent liquids or other foreign objects from affecting charge or discharge of the battery cell 31. The case 20 may be a simple three-dimensional structure such as a single cuboid, cylinder, or sphere, or a complex three-dimensional structure formed by combining simple three-dimensional structures such as a cuboid, cylinder, or sphere. In the embodiments of this application, an example in which the case 20 is only a cuboid is used for illustration. A material of the case 20 may be an alloy material such as aluminum alloy or iron alloy, a polymer material such as polycarbonate or polyisocyanurate foam plastic, or a composite material such as glass fiber reinforced epoxy resin.

In some embodiments of this application, the case 20 may include an enclosure plate 23 and a bottom plate 22, where the bottom plate 22 and the enclosure plate 23 may be an integral structure or a detachable structure, the bottom plate 22 and the enclosure plate 23 together enclose the accommodation cavity, the bottom plate 22 and the cover plate 21 are respectively disposed at two ends of the enclosure plate 23, and the enclosure plate 23 is sandwiched between the cover plate 21 and the bottom plate 22.

To meet different power usage demands, the battery 10 may include a plurality of battery cells 31, where the battery cell 31 refers to the smallest unit constituting a battery assembly 30 or the battery 10. The plurality of battery cells 31 can be connected in series, in parallel, or in series-parallel via electrode terminals, where the series-parallel connection refers to a combination of series and parallel connections.

The battery assembly 30 may include one or more battery cells 31, where the plurality of battery cells 31 may first be connected in series, in parallel, or in series-parallel to form the battery assembly 30, and then a plurality of battery assemblies 30 can be connected in series, in parallel, or in series-parallel to form the battery 10. The battery cell 31 may be cylindrical, flat, cuboidal, or in other shapes. The battery cells 31 are generally classified into three types based on packaging: cylindrical battery cells, prismatic battery cells, and pouch battery cells.

The heat management component 40 includes a heat exchanger 41 and a fluid collector, where the heat exchanger 41 has a heat conduction cavity, the fluid collector has a fluid collection cavity, and the fluid collection cavity is configured to input a heat conductive medium into the heat conduction cavity or output the heat conductive medium from the heat conduction cavity. The heat conductive medium may flow into the heat conduction cavity through the fluid collection cavity and conduct heat with the battery cell 31, and the heat conductive medium after heat conduction may flow out of the heat conduction cavity through the fluid collection cavity, thereby continuously conducting heat for the battery cell 31 through circulating flow of the heat conductive medium. Additionally, a circulation pump may be provided on or outside the heat management component 40 to maintain a fluid inside the heat management component 40 in a circulating state, preventing heat concentration and enabling continuous heat conduction.

The heat conductive connection between the heat exchanger 41 and the battery cell 31 includes direct connection and indirect connection, where direct connection means the heat exchanger 41 is attached to the battery cell 31 without an intermediate connector or heat conductive adhesive, and indirect connection means the heat exchanger 41 is connected to the battery cell 31 through a connector or heat conductive adhesive for heat conduction. Meanwhile, the heat exchanger 41 is configured to support the battery cell 31, that is, the battery cell 31 is connected to the heat exchanger 41, and the heat exchanger 41 supports the battery cell 31, thereby fixing a position of the battery cell 31 relative to the case 20.

According to the battery 10 of this application, the heat exchanger 41 bears the battery cell 31 and is heat-conductively connected to the battery cell 31, so that the heat exchanger 41 can conduct heat for the battery cell 31, and the heat exchanger 41 bears at least part of the weight of the battery cell 31. Since the fluid collector is connected to the heat exchanger 41, at least part of the weight of the battery cell 31 can be transferred to the fluid collector through the heat exchanger 41. The support member is disposed below the fluid collector, so that at least part of the weight of the battery cell 31 is transferred to the support member, thereby reducing the probability of damages such as bending or breakage of the fluid collector.

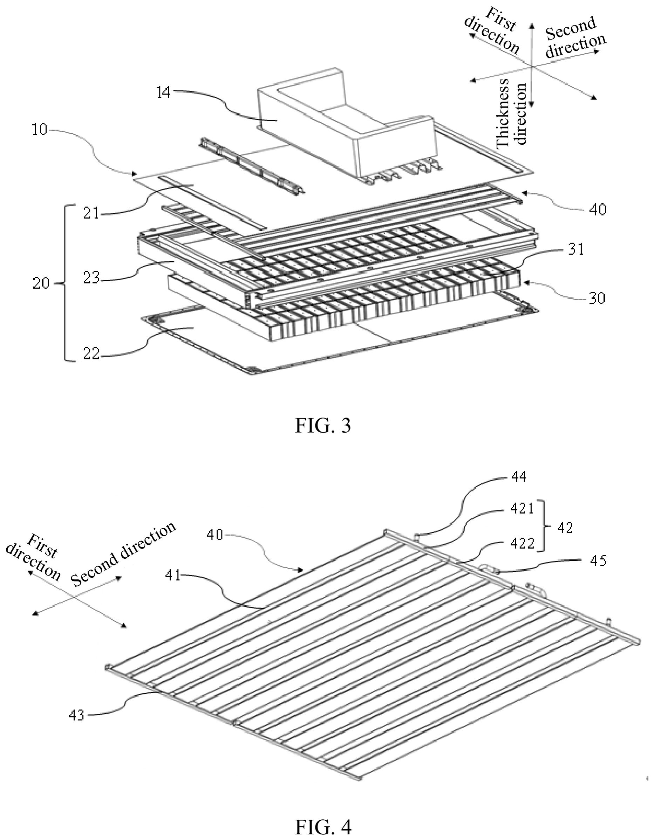

As shown in FIG. 4, the heat management component 40 may include at least two heat exchangers 41 with a plate structure, where the at least two heat exchangers 41 are spaced apart along a first direction, the first direction is perpendicular to an axial direction of the heat conduction cavity, the fluid collector includes a first fluid collector 42 and a second fluid collector 43, the first fluid collector 42 and the second fluid collector 43 each extend along a second direction, a first end of the heat conduction cavity of any one of the at least two heat exchangers 41 communicates with the first fluid collector 42, and a second end of the heat conduction cavity of any one of the at least two heat exchangers 41 communicates with the second fluid collector 43.

The first fluid collector 42 includes a first pipe portion 421 and a second pipe portion 422, where the first pipe portion 421 and the second pipe portion 422 are respectively disposed at first ends of the heat exchangers 41 and are disconnected, the first pipe portion 421 communicates with first ends of some of the heat exchangers 41, the second pipe portion 422 communicates with first ends of other heat exchangers 41, one of the first pipe portion 421 and the second pipe portion 422 is provided with a liquid inlet 44, and the other of the first pipe portion 421 and the second pipe portion 422 is provided with a liquid outlet 45.

The first pipe portion 421 and the second pipe portion 422 are respectively connected to the first ends of all the heat exchangers 41, and the liquid inlet 44 is provided on one of the first pipe portion 421 and the second pipe portion 422 and the liquid outlet 45 is provided on the other. In this way, the heat conductive medium can be introduced into the heat exchanger 41 through the liquid inlet 44 and flow out of the heat exchanger 41 through the liquid outlet 45. During the flow of the heat conductive medium, the heat conductive medium can pass through all the heat exchangers 41 via the second fluid collector 43. Meanwhile, both the liquid inlet 44 and the liquid outlet 45 are disposed at the first end, to effectively reduce a size of the heat management component 40 along the second direction. The second direction is perpendicular to the first direction.

In some embodiments of this application, the first fluid collector 42 and the second fluid collector 43 each may alternatively be a complete tube structure, where the first fluid collector 42 is provided with a liquid inlet 44, and the second fluid collector 43 is provided with a liquid outlet 45, that is, the liquid inlet 44 and the liquid outlet 45 are respectively disposed at two ends in an axial direction of the heat conduction cavity, and the liquid inlet 44 and the liquid outlet 45 are in communication through the heat conduction cavity.

In some embodiments of this application, the first fluid collector 42 and the second fluid collector 43 each may be supported by a support member, or either is supported by a support member. In this application, an example in which only the first fluid collector 42 is supported by a support member is used for illustration.

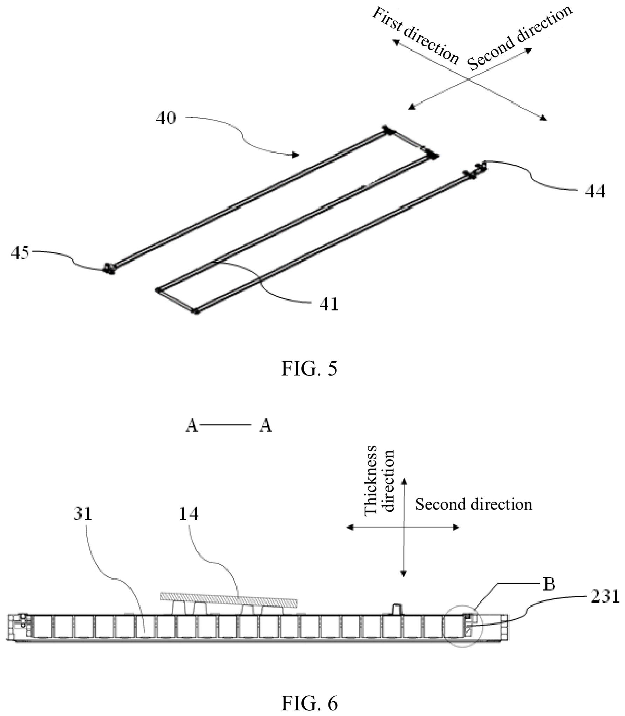

As shown in FIG. 5, in some embodiments of this application, the heat management component 40 may include at least two heat exchangers 41 with a tube structure, where the at least two heat exchangers 41 are spaced apart along a first direction, the first direction is a width direction of the cover plate 21, and any one of the heat exchangers 41 includes a bent structure formed by a plurality of tube structures sequentially connected.

As shown in FIG. 3, FIG. 6, and FIG. 7, in some embodiments of this application, the heat exchanger 41 is located between the battery cell 31 and the cover plate 21, and is configured to heat-conductively connect to the battery cell 31 and the cover plate 21.

Specifically, the heat exchanger 41 is disposed above the battery cell 31 and below the cover plate 21, and is heat-conductively connected to the battery cell 31 and the cover plate 21 separately. The cover plate 21 may be a steel plate, an aluminum plate, or another heat-conductive metal plate. Compared with most existing cover plates 21 made of non-metallic materials, a cover plate 21 made of a metallic material has better heat conductivity, facilitating heat conduction between the heat exchanger 41 and the cover plate 21.

The connection between the heat exchanger 41 and the cover plate 21 includes one or more of bonding, bolting, and welding. The heat exchanger 41 is bonded to at least some of the battery cells 31 through a heat-conductive adhesive. The heat-conductive adhesive has good heat conductivity and bonding performance, effectively fixing the battery cell 31 to the cover plate 21 and enabling heat conduction with the cover plate 21.

Disposing the heat exchanger 41 between the battery cell 31 and the cover plate 21 enables the heat exchanger 41 to conduct heat for the battery cell 31 and also to conduct heat upward through the cover plate 21 to a structural component on a side of the cover plate 21 away from the battery cell 31, allowing simultaneous heat management of components on two sides and improving effective utilization of the heat exchanger 41. When a temperature of the battery cell 31 or a component on an outer side of the cover plate 21 is low, the heat exchanger 41 can heat the battery cell 31 or the component on the outer side of the cover plate 21; alternatively, when the temperature of the battery cell 31 or the outer side of the cover plate 21 rises, the heat exchanger 41 can dissipate heat for the battery cell 31 and the component on the outer side of the cover plate 21, lowering the temperature of the battery cell 31 or the component on the outer side of the cover plate 21, thereby broadening application of the heat conduction function of the heat exchanger 41 and improving effective utilization of the heat exchanger 41.

For example, a cabin floor of the vehicle 1 may be connected to the cover plate 21, or the cabin floor may be directly formed by the cover plate 21. Since the heat exchanger 41 is heat-conductively connected to the battery cell 31 and the cover plate 21, the heat exchanger 41 can effectively conduct heat for the battery cell 31, effectively conduct heat for the cover plate 21, and conduct heat for the cabin floor through the cover plate 21. When a temperature of the battery cell 31 or the cabin floor is low, the heat exchanger 41 can heat the battery cell 31 and the cabin floor; alternatively, when the temperature of the battery cell 31 or the cabin floor rises, the heat exchanger 41 can dissipate heat for the battery cell 31 and the cabin floor, to lower the temperature of the battery cell 31 and the cabin floor, thereby improving comfort inside the cabin and reducing adverse effects of heat on the battery cell 31.

Referring to FIG. 3, FIG. 6, and FIG. 7, in some embodiments of this application, the case 20 includes a plurality of case beams connected to the cover plate 21, where the case beams form the support member.

Specifically, the case beams include a plurality of side beams, where the plurality of side beams enclosure a frame structure of the enclosure plate 23 and are configured to connect the case 20 and the cover plate 21. The side beams have a certain supporting strength, and are capable of supporting the first fluid collector 42, transferring and sharing part of the weight of the battery cell 31 borne by the first fluid collector 42, thereby reducing the probability of damages such as bending or breakage of the first fluid collector 42. In some embodiments of this application, the case beams may further include a partition beam (not shown in the figures), where the partition beam is disposed inside the frame structure enclosed by the plurality of side beams and is configured to divide the accommodation cavity into at least two chambers, with at least one used to accommodate the battery cell 31. The partition beam also has a certain supporting strength, and is capable of supporting the first fluid collector 42, transferring and sharing part of the weight of the battery cell 31 borne by the first fluid collector 42, thereby reducing the probability of damages such as bending or breakage of the first fluid collector 42. In some embodiments of this application, another support structure, such as support column or support bar, can be provided inside the case 20 on a surface of the bottom plate 22 facing the cover plate 21, and the support column or support bar is disposed below the first fluid collector 42 and configured to support the first fluid collector 42.

Referring to FIG. 3, FIG. 6, and FIG. 7, in some embodiments of this application, the case beam is formed with an accommodation groove 25, and at least part of the fluid collector is located in the accommodation groove 25.

The accommodation groove 25 is provided on the case beam and at least part of the first fluid collector 42 is positioned in the accommodation groove 25, so that the case beam can support the first fluid collector 42 and bear at least part of the weight of the battery cell 31 while space that is for the battery cells 31 inside the case 20 and that is occupied by the first fluid collector 42 is reduced, thereby facilitating arrangement of more battery cells 31 within the case 20 and improving a power supply capacity of the battery 10.

As shown in FIG. 3, in some embodiments of this application, the case beams include a partition beam, where the partition beam is configured to divide the accommodation cavity into at least two chambers, the at least two chambers include a first chamber for accommodating the battery cells 31, and a surface of the partition beam facing the first chamber or a surface facing the cover plate 21 has the accommodation groove.

The heat exchanger 41 may be located within the first chamber to conduct heat for the battery cell 31, and the first fluid collector 42 is disposed in the accommodation groove on the partition beam. According to the above solution, the first fluid collector 42 does not occupy space within the first chamber, thereby facilitating the arrangement of more battery cells 31 in the first chamber. Additionally, the first fluid collector 42 is close to the first chamber, facilitating the connection between the heat exchanger 41 and the first fluid collector 42, and avoiding excessive protrusion of the heat exchanger 41 beyond the first chamber, which results in material waste.

Referring to FIG. 3, FIG. 6, and FIG. 7, in some embodiments of this application, the case beams include a first side beam 231, where a surface of the first side beam 231 facing the cover plate or a surface facing the accommodation cavity is provided with the accommodation groove 25.

Specifically, the surface of the first side beam 231 facing the accommodation cavity is provided with the accommodation groove 25. Since the first side beam 231 is disposed near an edge of the case 20, positioning the accommodation groove 25 on the first side beam 231 facilitates leading part of the structure of the first fluid collector 42 to the outside of the case 20, thereby enabling communication with an external pipeline.

Referring to FIG. 3, FIG. 6, and FIG. 8, in some embodiments of this application, the surface of the first side beam 231 facing the cover plate 21 is provided with the accommodation groove 25. Since the first side beam 231 is disposed near an edge of the case 20, positioning the accommodation groove 25 on the first side beam 231 facilitates leading part of the structure of the first fluid collector 42 to the outside of the case 20, thereby enabling communication with an external pipeline.

Referring to FIG. 3, FIG. 6, and FIG. 9, in some embodiments of this application, the surface of the cover plate 21 facing the case 20 is provided with the accommodation groove 25, the accommodation groove 25 is disposed directly above the case beam, and at least part of the fluid collector is located in the accommodation groove.

Since the cover plate 21 has a large area, the accommodation groove 25 is easily provided, and the accommodation groove does not occupy space of the case beam, thereby enhancing the supporting strength of the case beam. The accommodation groove 25 is disposed above the case beam, and the case beam supports the first fluid collector 42. In this way, at least part of the weight of the battery cell 31 can be transferred to the case beam, thereby reducing the probability of damages such as bending or breakage of the first fluid collector 42.

Referring to FIG. 3, FIG. 6, and FIG. 7, in some embodiments of this application, a first surface 2311 of the first side beam 231 facing the accommodation cavity is provided with the accommodation groove 25, and a minimum spacing dimension between the fluid collector and the battery cell 31 is greater than or equal to a minimum spacing dimension between the first surface 2311 and the battery cell 31.

Since the minimum spacing dimension between the first fluid collector 42 and the battery cell 31 is greater than or equal to the minimum spacing dimension between the first surface 2311 and the battery cell 31, that is, the first surface 2311 is disposed closer to the battery cell 31 in the accommodation cavity relative to the first fluid collector 42, the first fluid collector 42 does not protrude beyond the first surface 2311 and occupy the space for the battery cell 31 in the accommodation cavity, thereby facilitating arrangement of more battery cells 31 in the accommodation cavity and improving the power supply capacity of the battery 10.

In some embodiments of this application, a minimum thickness dimension of the fluid collector in a vertical direction is h1, where a value range of h1 is 0.5 mm≤h1≤50 mm, and preferably, the value range of h1 is 2 mm≤h1≤20 mm.

Specifically, along a direction perpendicular to the cover plate 21, a minimum thickness dimension of the first fluid collector 42 is h1, where h1 may be any value within a range of 0.5 mm...0.8 mm...1.0 mm...49 mm...50 mm. Since the weight of the battery cell 31 is at least partially borne by the heat exchanger 41, and the heat exchanger 41 is connected to the first fluid collector 42, at least part of the weight of the battery cell 31 can be transferred to the first fluid collector 42 through the heat exchanger 41. When the value of h1 is less than 0.5 mm, the thickness dimension of the first fluid collector 42 is excessively small, making the first fluid collector 42 prone to damages such as bending or breakage. When the value of h1 is greater than 50 mm, the thickness dimension of the first fluid collector 42 is excessively large, increasing the weight and cost of the battery 10. When the value range of h1 is 0.5 mm≤h1≤50 mm, the probability of damages such as bending or breakage of the first fluid collector 42 can be reduced, effective heat conduction for the battery cell 31 can be achieved, and the weight and cost of the battery 10 can be minimized.

Optionally, the value of h1 may be any value within the range of 2 mm...2.5 mm...5 mm...9 mm...20 mm. When the value range of h1 is 2 mm≤h1≤20 mm, the probability of damages such as bending or breakage of the first fluid collector 42 can be further reduced, effective heat conduction for the battery cell 31 can be achieved, and the weight and cost of the battery 10 can be minimized.

In some embodiments of this application, the weight of the battery is M, where 0.0005 mm/Kg≤h1/M≤10 mm/Kg, and preferably, 0.002 mm/Kg≤h1/M≤2 mm/Kg.

Specifically, a value of h1/M may be any value within the range of 0.0005 mm/Kg...0.001 mm/Kg...0.01 mm/Kg...4 mm/Kg...10 mm/Kg. Since the weight of the battery 10 is at least partially borne by the heat exchanger 41, when the value of h1/M is less than 0.0005 mm/Kg, the thickness dimension of the first fluid collector 42 is excessively small, making the first fluid collector 42 prone to damages such as bending or breakage; when the value of h1/M is greater than 10 mm/Kg, the dimension of the first fluid collector 42 is excessively large, increasing the weight and cost of the battery 10; and when the value range of h1/M is 0.0005 mm/Kg≤h1/M≤10 mm/Kg, the probability of damages such as bending or breakage of the first fluid collector 42 can be reduced, effective heat conduction for the battery cell 31 can be achieved, and the weight and cost of the battery 10 can be minimized.

Optionally, the value of h1/M may be any value within the range of 0.002 mm/Kg...0.01 mm/Kg...0.1 mm/Kg...0.5 mm/Kg...2 mm/Kg. When the value range of h1/M is 0.002 mm/Kg≤h1/M≤2 mm/Kg, the probability of damages such as bending or breakage of the first fluid collector 42 can be further reduced, effective heat conduction for the battery cell 31 can be achieved, and the weight and cost of the battery 10 can be minimized.

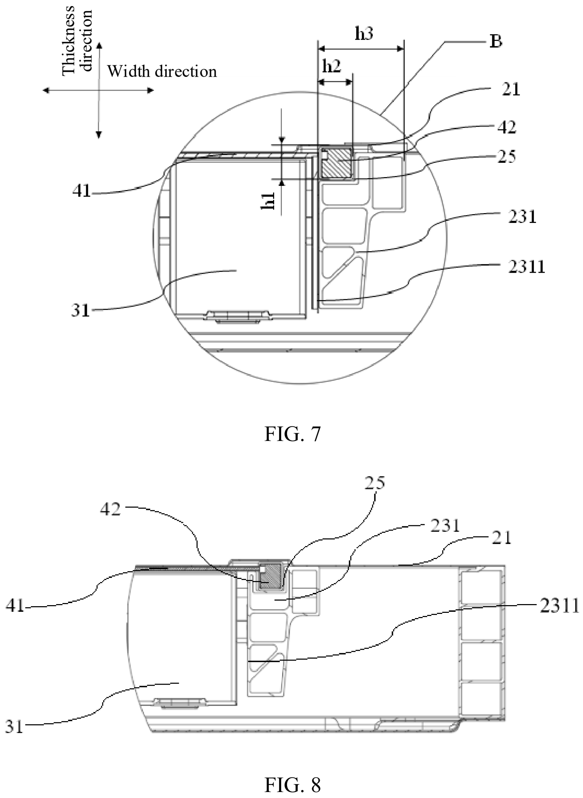

Referring to FIG. 4 and FIG. 7, in some embodiments of this application, a plurality of heat exchangers 41 are spaced apart along a first direction, and the fluid collector extends along the first direction and is connected to the plurality of heat exchangers 41 along a second direction, where the first direction and the second direction are perpendicular to each other.

A width dimension of the fluid collector along the second direction is h2, where a value range of h2 is 0.5 mm≤h2≤100 mm, and preferably, the value range of h2 is 3 mm≤h2≤20 mm.

Specifically, a plane defined by the first direction and the second direction is parallel to a plane where the cover plate 21 is located. The first direction is a width direction of the cover plate 21, and the second direction is a length direction of the cover plate 21. The value of h2 may be any value within the range of 0.5 mm...1.5 mm...5 mm...50 mm...100 mm. Since the first fluid collector 42 is configured to collect the heat conductive medium flowing into or out of the heat exchangers 41, when the value of h2 is less than 0.5 mm, the dimension of the first fluid collector 42 is excessively small, making the first fluid collector 42 unable to satisfy a confluence demand of the plurality of heat exchangers 41; when the value of h2 is greater than 100 mm, the dimension of the first fluid collector 42 is excessively large, increasing the weight and cost of the battery 10; and when the value range of h2 is 0.5 mm≤h2≤100 mm, the confluence demand of the plurality of heat exchangers 41 can be satisfied, effective heat conduction for the battery cell 31 can be achieved, and the weight and cost of the battery 10 can be minimized.

Optionally, the value of h2 may be any value within the range of 3 mm...3.5 mm...5 mm...10 mm...20 mm. When the value range of h2 is 3 mm≤h2≤20 mm, the confluence demand of the plurality of heat exchangers 41 can be better satisfied, effective heat conduction for the battery cell 31 can be achieved, and the weight and cost of the battery 10 can be minimized.

As shown in FIG. 7, in some embodiments of this application, a width dimension of the first side beam 231 along the second direction is h3, where 0.005<h2/h3≤50, and preferably, 0.03<h2/h3≤10.

Specifically, the value of h2/h3 may be any value within the range of 0.005...0.01...5...10...50.

Since the weight of the battery 10 is at least partially borne by the heat exchanger 41, and the heat exchanger 41 is connected to the first fluid collector 42, at least part of the weight of the battery 10 is transferred to the first fluid collector 42 through the heat exchanger 41. When the value of h2/h3 is less than 0.005, given a fixed dimension of the first side beam 231, the width dimension of the first fluid collector 42 relative to the first side beam 231 is excessively small, making the first fluid collector 42 prone to damages such as bending or breakage. When the value of h2/h3 is greater than 50, a larger accommodation groove 25 needs to be correspondingly provided on the first side beam 231, easily leading to insufficient strength and reduced reliability of the first side beam 231. When the value range of h2/h3 is 0.005<h2/h3≤50, the probability of damages such as bending or breakage of the first fluid collector 42 can be reduced, effective heat conduction for the battery cell 31 can be achieved, and the strength of the first side beam 231 can be enhanced.

Optionally, the value of h2/h3 may be any value within the range of 0.03...0.01...1...5...10. When the value range of h2/h3 is 0.03<h2/h3≤10, the probability of damages such as bending or breakage of the first fluid collector 42 can be further reduced, effective heat conduction for the battery cell 31 can be achieved, and the strength of the first side beam 231 can be enhanced.

Referring to FIG. 3, FIG. 10, and FIG. 11, in some embodiments of this application, the battery cell 31 includes a pressure relief mechanism 313 and a first end surface facing the heat exchanger 41, where the pressure relief mechanism 313 is located on an end surface of the battery cell 31 other than the first end surface.

Specifically, the battery cell 31 may have a plurality of end surfaces, including the first end surface, where the battery cell 31 may be heat-conductively connected to the heat exchanger 41 through the first end surface, and the pressure relief mechanism 313 may be disposed on any one of the plurality of end surfaces other than the first end surface.

When the battery cell 31 is in an abnormal state of thermal runaway, risks such as liquid-induced conduction caused by liquid leakage from the heat exchanger 41 or thermal management failure can be reduced, where the risks are brought by high-temperature, high-heat, or even flaming substances ejected by the battery cell 31 through the pressure relief mechanism 313 that damage the heat exchanger 41. Additionally, the high-temperature, high-heat, or flaming substances are not ejected toward the side of the cover plate 21 through the pressure relief mechanism 313, avoiding spread of heat anomalies from the side of the battery cell 31 to the other side of the cover plate 21.

In some embodiments of this application, the battery cell 31 further includes a second end surface facing away from the heat exchanger 41, where the pressure relief mechanism 313 is located on the second end surface.

Specifically, the first end surface and the second end surface are respectively disposed at two ends of the battery cell 31, so that the second end surface has a maximum spacing dimension from the first end surface compared with other end surfaces of the battery cell 31. Thus, when the battery cell 31 is in the abnormal state of thermal runaway, the risks such as liquid-induced conduction caused by liquid leakage from the heat exchanger 41 or thermal management failure can be further reduced, where the risks are brought by the high-temperature, high-heat, or even flaming substances ejected by the battery cell 31 through the pressure relief mechanism 313 that damage the heat exchanger 41. Additionally, the high-temperature, high-heat, or flaming substances are not ejected toward the side of the cover plate 21 through the pressure relief mechanism 313, avoiding spread of heat anomalies from the side of the battery cell 31 to the other side of the cover plate 21.

Referring to FIG. 3, FIG. 10, and FIG. 11, in some embodiments of this application, the battery cell 31 may be a prismatic battery, including a first end surface and a second end surface disposed opposite each other along a vertical direction, where the first end surface is connected to the heat exchanger 41, and the second end surface faces the bottom plate 22. The second end surface includes a first electrode terminal 311, a second electrode terminal 312, and a pressure relief mechanism 313, where the first electrode terminal 311, the second electrode terminal 312, and the pressure relief mechanism 313 all face the bottom plate 22 and are provided with a gap from the bottom plate 22, thereby facilitating pressure relief through the pressure relief mechanism 313 and arrangement of connection structures between first electrode terminals 311 and second electrode terminals 312 among different battery cells 31.

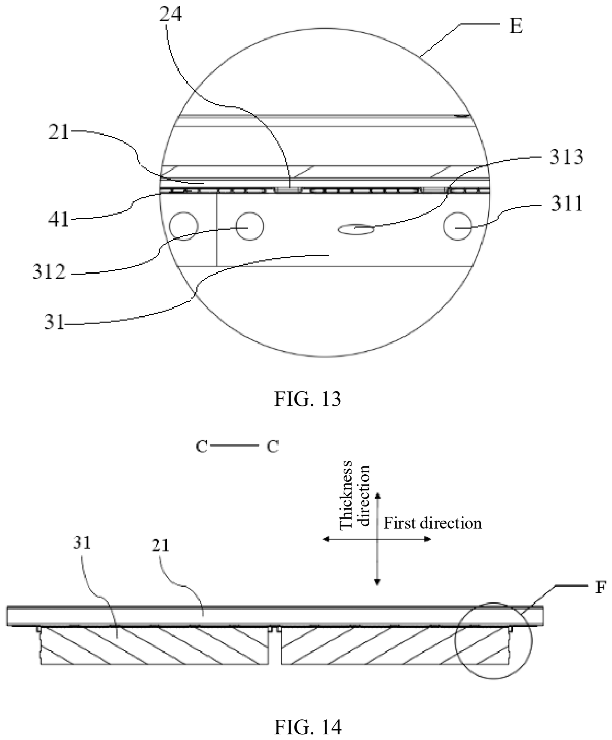

Referring to FIG. 3, FIG. 12, and FIG. 13, in some embodiments of this application, the battery cell 31 may be a prismatic battery, including a first end surface and a second end surface disposed opposite each other along a vertical direction, where the first end surface is connected to the heat exchanger 41, and the second end surface faces the bottom plate 22. The first end surface has a largest area, thereby enhancing a connection strength between the battery cell 31 and the heat exchanger 41 and increasing a heat conduction area between the battery cell 31 and the heat exchanger 41, thus improving heat conduction speed. The battery cell 31 further includes a plurality of side surfaces disposed between the first end surface and the second end surface, where a side surface facing the enclosure plate 23 is provided with a first electrode terminal 311, a second electrode terminal 312, and a pressure relief mechanism 313, and the first electrode terminal 311, the second electrode terminal 312, and the pressure relief mechanism 313 are separately provided with a gap from the enclosure plate 23, thereby facilitating pressure relief through the pressure relief mechanism 313 and arrangement of connection structures between first electrode terminals 311 and second electrode terminals 312 among different battery cells 31.

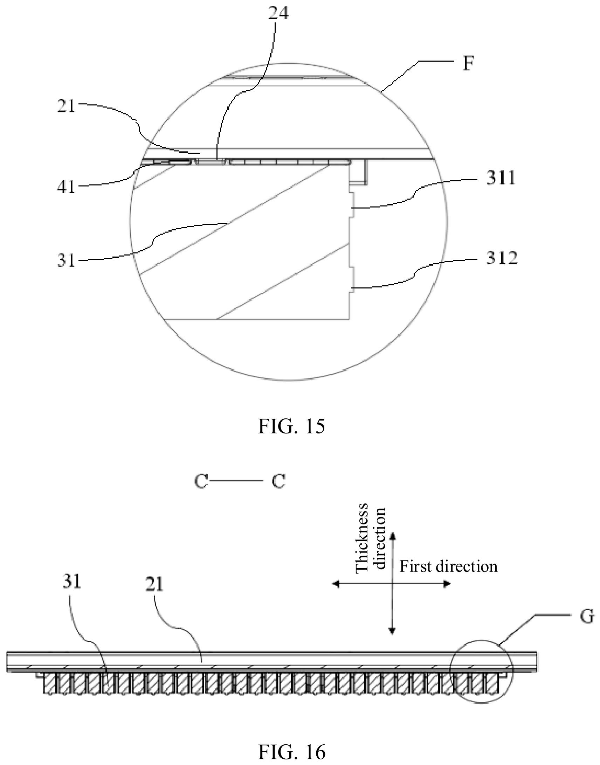

Referring to FIG. 3, FIG. 14, and FIG. 15, in some embodiments of this application, the battery cell 31 is a strip-shaped battery, including a first end surface and a second end surface disposed opposite each other along a vertical direction, where the first end surface is connected to the heat exchanger 41, and the second end surface faces the bottom plate 22. The battery cell 31 further includes a plurality of side surfaces disposed between the first end surface and the second end surface, where a side surface facing the enclosure plate 23 is provided with a first electrode terminal 311, a second electrode terminal 312, and a pressure relief mechanism 313, and the first electrode terminal 311, the second electrode terminal 312, and the pressure relief mechanism 313 are separately provided with a gap from the enclosure plate 23, thereby facilitating pressure relief through the pressure relief mechanism 313 and arrangement of connection structures between first electrode terminals 311 and second electrode terminals 312 among different battery cells 31.

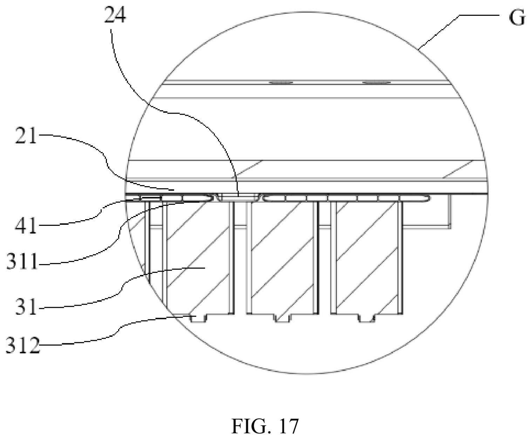

Referring to FIG. 3, FIG. 16, and FIG. 17, in some embodiments of this application, the battery cell 31 is a cylindrical battery, including a first end surface and a second end surface disposed opposite each other along a vertical direction, where the first end surface is connected to the heat exchanger 41, and the second end surface faces the bottom plate 22. The first end surface is provided with a first electrode terminal 311, and the second end surface is provided with a second electrode terminal 312 and a pressure relief mechanism 313, where the second electrode terminal 312 and the pressure relief mechanism 313 are separately provided with a gap from the bottom plate 22, thereby facilitating pressure relief through the pressure relief mechanism 313 and arrangement of connection structures between second electrode terminals 312 among different battery cells 31.

Referring to FIG. 3, FIG. 4, FIG. 10, and FIG. 11, in some embodiments of this application, a protrusion 24 is disposed between any two adjacent heat exchangers 41 among the at least two heat exchangers 41, the protrusion 24 is connected to the cover plate 21, and a surface of the protrusion 24 facing the battery cell 31 is flush with a surface of the heat exchanger 41 facing the battery cell 31.

Specifically, the heat exchanger 41 is attached to the cover plate 21, and part of the cover plate 21 between any two adjacent heat exchangers 41 protrudes toward the battery cell 31, thereby forming the protrusion 24. Alternatively, the cover plate 21 is provided with grooves for installing the heat exchangers 41, the heat exchangers 41 are disposed in the grooves, and a portion between the grooves protrudes relative to the grooves, thereby forming the protrusion 24.

Since any two adjacent heat exchangers 41 are spaced apart, the protrusion 24 is provided between adjacent heat exchangers 41, and a surface of the protrusion 24 facing the battery cell 31 is flush with a surface of the heat exchanger 41 facing the battery cell 31, the protrusion 24 and the heat exchanger 41 can jointly fasten the battery cell 31 in a process of connecting the battery cell 31 with the cover plate 21 through the heat exchanger 41, thereby improving fastening effect of the battery cell 31.

Referring to FIG. 1 to FIG. 3, a second aspect of this application further provides an electric device, including the battery 10 according to any one of the above embodiments, where the battery 10 is configured to provide electric energy for the electric device.

Referring to FIG. 1 to FIG. 3, in some embodiments of the second aspect of this application, the electric device is the vehicle 1, where the cover plate 21 is configured as the cabin floor of the vehicle 1.

The cover plate 21 is configured as the cabin floor of the vehicle 1, that is, at least part of the cabin floor is used to form the cover plate 21. Since the heat exchanger 41 is heat-conductively connected to the battery cell 31 and the cover plate 21, the heat exchanger 41 can effectively conduct heat for the battery cell 31 and also effectively conduct heat for the cabin floor. When a temperature of the battery cell 31 or the cabin floor is low, the heat exchanger 41 can heat the battery cell 31 and the cabin floor; alternatively, when the temperature of the battery cell 31 or the cabin floor rises, the heat exchanger 41 can dissipate heat for the battery cell 31 and the cabin floor, reducing the temperature of the battery cell 31 and the cabin floor, thereby improving comfort inside the cabin and reducing adverse effects of heat on the battery cell 31.

Referring to FIG. 1 to FIG. 3, in some embodiments of this application, a seat beam 14 is connected to the cover plate 21.

Since the heat exchanger 41 can effectively conduct heat for the battery cell 31 and also effectively conduct heat for the cover plate 21, by connecting the cover plate 21 to the seat beam 14, heat can be conducted for the seat beam 14 through the cover plate 21. When a temperature of the seat beam 14 is low, the heat exchanger 41 can heat the seat beam 14; alternatively, when the temperature of the seat beam 14 rises, the heat exchanger 41 can dissipate heat for the seat beam 14, reducing the temperature of the seat beam 14 and improving comfort of the seat beam 14.

The above description is merely an overview of the technical solutions of this application. To enable a clearer understanding of the technical means of this application, the technical means can be implemented according to the content of the specification. Furthermore, to make the above and other objectives, features, and advantages of this application more apparent and understandable, specific embodiments of this application are provided below.

Referring to FIG. 1 to FIG. 4, in some embodiments of this application, the vehicle 1 includes the cabin floor and the battery 10 disposed below the cabin floor, where the battery 10 includes the case 20, the cover plate 21, the battery cell 31, and the heat management component 40; the case 20 includes the accommodation cavity and the opening communicating with the accommodation cavity; the cover plate 21 is located above the case 20 and covers the opening; the battery cell 31 is placed in the accommodation cavity; the heat management component 40 includes the heat exchanger 41, the first fluid collector 42, and the second fluid collector 43; the heat exchanger 41 has the heat conduction cavity; the first fluid collector 42 and the second fluid collector 43 each have a fluid collection cavity; and the heat conduction cavity and the fluid collection cavity are in communication and are both configured to accommodate a heat conductive medium. The heat exchanger 41 is located between the battery cell 31 and the cover plate 21, and is configured to heat-conductively connect to the battery cell 31 and the cover plate 21, while the heat exchanger 41 is configured to bear the battery cell 31. The plurality of heat exchangers 41 are spaced apart along the first direction, and the first fluid collector 42 extends along the first direction and is connected to the plurality of heat exchangers 41 along the second direction, where the first direction and the second direction are perpendicular to each other. The cover plate 21 is configured as the cabin floor, that is, at least part of the cabin floor is used to form the cover plate 21 of the battery 10. The seat beam 14 is further connected to the cover plate 21. The cover plate 21 is made of a metallic material. The connection between the heat exchanger 41 and the cover plate 21 includes one or more of bonding, bolting, and welding. The heat exchanger 41 is bonded to at least some of the battery cells 31 through a heat conductive adhesive.

Referring to FIG. 3 and FIG. 7, the case 20 includes the first side beam 231; the first side beam 231 is located below the first fluid collector 42; the first surface 2311 of the first side beam 231 facing the accommodation cavity is provided with the accommodation groove 25; at least part of the first fluid collector 42 is disposed in the accommodation groove 25; and the minimum spacing dimension between the first fluid collector 42 and the battery cell 31 is greater than or equal to the minimum spacing dimension between the first surface 2311 and the battery cell 31. The minimum thickness dimension of the first fluid collector 42 in the vertical direction is h1, where the value range of h1 is 0.5 mm≤h1≤50 mm, and preferably, the value range of h1 is 2 mm≤h1≤20 mm. The weight of the battery is M, where 0.0005 mm/Kg≤h1/M≤10 mm/Kg, and preferably, 0.002 mm/Kg≤h1/M≤2 mm/Kg. The width dimension of the first fluid collector 42 along the second direction is h2, where the value range of h2 is 0.5 mm≤h2≤100 mm, and preferably, the value range of h2 is 3 mm≤h2≤20 mm. The width dimension of the first side beam 231 along the second direction is h3, where 0.005<h2/h3≤50, and preferably, 0.03<h2/h3≤10.

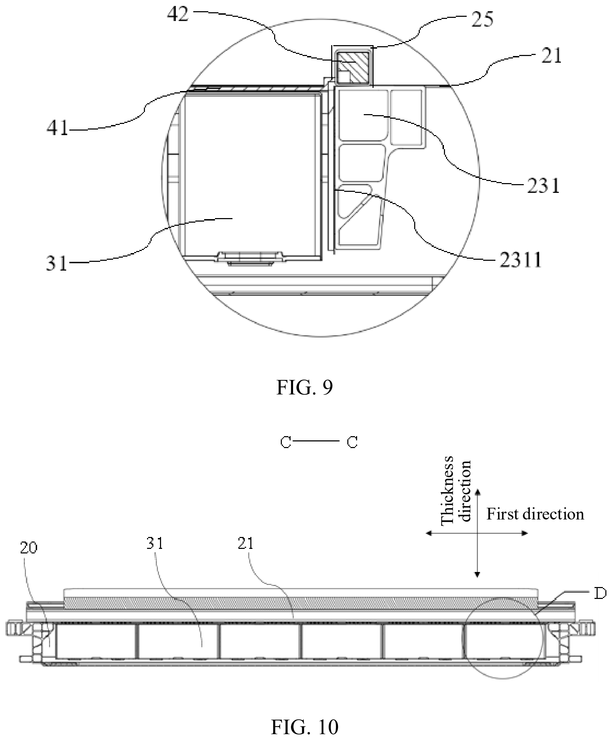

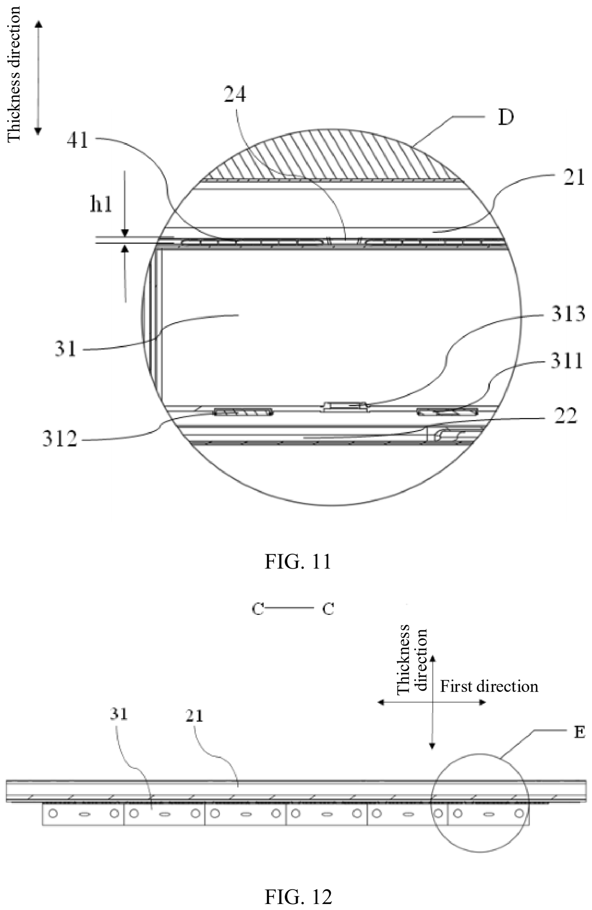

Referring to FIG. 10 and FIG. 11, the battery cell 31 includes the first end surface and the second end surface, where the first end surface is bonded to the heat exchanger 41 through a heat conductive adhesive, and the second end surface faces away from the heat exchanger 41 and faces the bottom plate 22 of the case 20. The second end surface is provided with the first electrode terminal 311, the second electrode terminal 312, and the pressure relief mechanism 313.

Finally, it should be noted that the above embodiments are only used to illustrate the technical solutions of this application and are not intended to limit the technical solutions; although this application has been described in detail with reference to the foregoing embodiments, persons of ordinary skill in the art should understand that modifications can still be made to the technical solutions described in the foregoing embodiments, or equivalent replacements can be made to some or all of the technical features; these modifications or replacements do not cause the essence of the corresponding technical solutions to depart from the scope of the technical solutions of the embodiments of this application, and all such modifications or replacements shall be encompassed within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery, **characterized by** comprising:
a case and a cover plate, wherein the case comprises an accommodation cavity and an opening communicating with the accommodation cavity, and the cover plate is located above the case and covers the opening;
a battery cell, disposed in the accommodation cavity;
a heat management component, wherein the heat management component comprises a heat exchanger and a fluid collector, the heat exchanger and the fluid collector are connected to each other with internal cavities in communication, and the heat exchanger is configured to bear the battery cell and is heat-conductively connected to the battery cell; and
a support member, at least partially located below the fluid collector, wherein the support member is connected to the fluid collector.

2. The battery according to claim 1, **characterized in that** the heat exchanger is located between the battery cell and the cover plate, and is configured to heat-conductively connect to the battery cell and the cover plate.

3. The battery according to claim 1, **characterized in that** the case comprises a plurality of case beams connected to the cover plate, and the case beams form the support member.

4. The battery according to claim 3, **characterized in that** the case beam is formed with an accommodation groove, and at least part of the fluid collector is located in the accommodation groove.

5. The battery according to claim 4, **characterized in that** the case beams comprise a partition beam, the partition beam is configured to divide the accommodation cavity into at least two chambers, the at least two chambers comprise a first chamber for accommodating the battery cell, and a surface of the partition beam facing the first chamber or a surface facing the cover plate has the accommodation groove.

6. The battery according to claim 4, **characterized in that** the case beams comprise a first side beam, and a surface of the first side beam facing the cover plate or a surface facing the accommodation cavity is provided with the accommodation groove.

7. The battery according to claim 6, **characterized in that** a first surface of the first side beam facing the accommodation cavity is provided with the accommodation groove, and a minimum spacing dimension between the fluid collector and the battery cell is greater than or equal to a minimum spacing dimension between the first surface and the battery cell.

8. The battery according to claim 1, **characterized in that** a minimum thickness dimension of the fluid collector in a vertical direction is h1, wherein a value range of h1 is 0.5 mm≤h1≤50 mm, and preferably, the value range of h1 is 2 mm≤h1≤20 mm.

9. The battery according to claim 8, **characterized in that characterized in that** a weight of the battery is M, wherein 0.0005 mm/Kg≤h1/M≤10 mm/Kg, and preferably, 0.002 mm/Kg≤h1/M≤2 mm/Kg.

10. The battery according to claim 6, **characterized in that** a plurality of heat exchangers are provided and spaced apart along a first direction, the fluid collector extends along the first direction and is connected to the plurality of heat exchangers along a second direction, and the first direction and the second direction are perpendicular to each other; and
a width dimension of the fluid collector along the second direction is h2, wherein a value range of h2 is 0.5 mm≤h2≤100 mm, and preferably, the value range of h2 is 3 mm≤h2≤20 mm.

11. The battery according to claim 10, **characterized in that** a width dimension of the first side beam along the second direction is h3, wherein 0.005<h2/h3≤50, and preferably, 0.03<h2/h3≤10.

12. The battery according to claim 3, **characterized in that** a surface of the cover plate facing the case is provided with an accommodation groove, the accommodation groove is disposed directly above the case beam, and at least part of the fluid collector is located in the accommodation groove.

13. The battery according to any one of claims 1 to 12, **characterized in that** the battery cell comprises a pressure relief mechanism and a first end surface facing the heat exchanger, and the pressure relief mechanism is located on another end surface of the battery cell other than the first end surface.

14. The battery according to claim 13, **characterized in that** the battery cell further comprises a second end surface facing away from the heat exchanger, and the pressure relief mechanism is located on the second end surface.

15. An electric device, **characterized by** comprising the battery according to any one of claims 1 to 14, wherein the battery is configured to provide electric energy for the electric device.

16. The electric device according to claim 15, **characterized in that** the electric device is a vehicle, and the cover plate is configured as a cabin floor of the vehicle.

17. The electric device according to claim 16, **characterized in that** a seat beam is connected to the cover plate.
